# DEMANDE DE BREVET EUROPEEN

(11) **EP 1 701 126 A1**
(43) Date de publication de la demande: **13.09.2006**
(21) Numéro de dépôt: 05003108.7
(22) Date de dépôt: 14.02.2005
(51) Int. Cl.: F28F 9/02

(54) **Procédé d'assemblage d'une boite collectrice sur un collecteur d'un échangeur de chaleur, et assemblage ainsi obtenu**

(71) Demandeur: VALEO SYSTEMES THERMIQUES, 78321 Le Mesnil Saint Denis (FR)
(72) Inventeur: Bellenfant, Aurélie, 72210 Roeze Sur Sarthe (FR)
(74) Mandataire: Rolland, Jean-Christophe

(57) **Abrégé**

Le procédé de l'invention comporte les étapes consistant a) à engager une boîte collectrice (10) et un collecteur (12) de sorte que leurs bords latéraux respectifs (22, 24) se chevauchent au moins en partie ; b) à prévoir un appui (36) sur la face interne de l'assemblage au niveau du chevauchement ; et c) à pratiquer au moins une empreinte (44) par poinçonnage au niveau de l'appui interne de façon à obtenir un léger sertissage entre les bords latéraux (22, 24) de la boîte collectrice et du collecteur. Ces derniers peuvent être ensuite assemblés par brasage dans un four approprié. L'invention s'applique notamment aux échangeurs de chaleur pour véhicules automobiles.

## Description

L'invention se rapporte au domaine des échangeurs de chaleur, notamment pour véhicules automobiles.

Elle concerne plus particulièrement un procédé d'assemblage d'une boîte collectrice sur un collecteur d'un échangeur de chaleur, et l'assemblage ainsi obtenu.

Un échangeur de chaleur comporte au moins une boîte collectrice reliée à un collecteur pour définir au moins un compartiment dans lequel débouche une ou plusieurs rangées de tubes pour la circulation d'un fluide caloporteur. On connaît aussi des boîtes collectrices de forme générale rectangulaire qui peuvent comporter une cloison intérieure longitudinale, pour former ainsi deux compartiments longitudinaux communiquant avec deux rangées de tubes, ou avec deux parties d'une même rangée de tubes.

Dans les échangeurs de chaleur de type brasé, le procédé d'assemblage comporte une étape consistant à engager la boîte collectrice et le collecteur de sorte que leurs bords latéraux respectifs se chevauchent au moins en partie, afin d'assurer une fixation provisoire de la boîte collectrice et du collecteur avant brasage.

Il est en effet nécessaire que la boîte collectrice et le collecteur soient maintenus entre eux de façon provisoire pour que le brasage ultérieur s'effectue dans des conditions satisfaisantes, les deux éléments étant correctement positionnés l'un par rapport à l'autre.

Il existe déjà différents procédés d'assemblage destinés à assurer une fixation provisoire d'une boîte collectrice et d'un collecteur en vue de leur brasage ultérieur.

Cet assemblage provisoire peut être effectué par exemple par un sertissage au moyen de dents, comme enseigné par les documents DE 19 515 530 ou US 6 302 196. Un autre procédé, enseigné par le document EP 0 718 580, consiste à réaliser un ensemble en saillie sur une pièce s'emboîtant dans une partie concave d'une autre pièce, grâce à des déformations pratiquées dans les pièces avant assemblage.

Il est connu aussi par le document EP 0 656 517 de réaliser une liaison entre une cloison et un collecteur par emboîtement d'une partie dans des fentes ou rainures pratiquées dans l'autre partie.

Une autre solution, connue par le document FR 2 742 535, consiste à réaliser un assemblage entre une boîte collectrice et un collecteur par une gorge pratiquée dans le collecteur.

On connaît aussi par le document DE 4 339 952 de réaliser un assemblage sur des collecteurs composés chacun d'un fond et d'un couvercle engagés l'un dans l'autre par des bords latéraux et pourvus chacun de pièces de fermeture terminale ainsi qu'au moins une cloison placée transversalement à sa direction longitudinale. Cette cloison sert d'appui lors du poinçonnage qui permet l'assemblage provisoire.

Ces procédés connus ne sont pas entièrement satisfaisants.

Les procédés faisant appel à un sertissage occasionnent des problèmes de dessertissage et/ou de mauvais sertissage des dents, ce qui entraîne un mouvement de la boîte collectrice par rapport au collecteur, aussi bien pendant le transport qu'au cours du procédé d'assemblage de l'échangeur de chaleur. Il en résulte des rebuts en fin de ligne de production, en raison des mouvements des composants, ainsi que des fuites occasionnées par ces mouvements.

En outre, les jeux entre les dents de la boîte collectrice et les trous du collecteur sont difficiles à maîtriser. Il en résulte là aussi des rebuts en fin de ligne de production, en raison des fuites ainsi occasionnées.

Par ailleurs, lorsque le maintien de l'assemblage est effectué par un emboîtement d'une pièce dans une gorge pratiquée dans une autre pièce, cette solution génère de l'encombrement et est exigeante en ce qui concerne l'outillage nécessaire pour le formage de ces pièces. D'autre part, lorsque l'assemblage comporte une cloison longitudinale, l'appui direct sur cette cloison entraîne un risque élevé de déformation de cette cloison par flambement, en raison du rapport élevé ente la longueur et l'épaisseur de la cloison.

Enfin, lorsque le maintien de l'assemblage est réalisé par une coopération saillie-cavité, il est nécessaire de prévoir des tolérances strictes de fabrication de chacune de ces pièces.

L'invention a notamment pour but de surmonter les inconvénients précités.

Elle vise en particulier à procurer un procédé d'assemblage du type défini en introduction qui permet à l'assemblage de résister aux efforts classiques de transport, manutention et autres étapes d'assemblage avant brasage de l'échangeur de chaleur, tout en causant une déformation limitée aux seules zones poinçonnées.

Elle vise aussi à procurer un tel procédé d'assemblage qui peut être mis en oeuvre à l'aide d'un outillage simple, sans nécessiter d'usinage particulier des composants à assembler.

L'invention propose à cet effet un procédé d'assemblage du type défini précédemment, dans lequel l'étape d'engagement
a) est suivie des étapes consistant à :
b) prévoir un appui sur la face interne de l'assemblage au niveau du chevauchement ; et
c) pratiquer au moins une empreinte par poinçonnage sur la face externe de l'assemblage au niveau de l'appui interne de façon à obtenir un léger sertissage entre les bords latéraux de la boîte collectrice et du collecteur.

Ainsi, le maintien provisoire de la boîte collectrice et du collecteur en vue du brasage est obtenu en pratiquant au moins une empreinte sur les pièces en vis-à-vis, de manière à obtenir un léger sertissage.

Ce sertissage est réalisé par la pression d'un poinçon sur la face externe de l'assemblage, en coopération avec un appui interne, formant enclume, empêchant la déformation des pièces sous l'action de la pression du poinçon. L'appui interne est, notamment, distinct du collecteur et de la boite collectrice.

Au niveau où est réalisé le poinçonnage, il est prévu, par exemple, une épaisseur de matière définie par le collecteur et une épaisseur de matière définie par la boîte collectrice. Le poinçonnage ne concerne ainsi que deux épaisseurs de matière.

Dans une forme de réalisation de l'invention, dans l'étape b), on introduit une came amovible à l'intérieur de la boîte collectrice et on applique la came amovible contre la face interne de l'assemblage pour former l'appui interne, tandis que, dans l'étape c), on pratique le poinçonnage dans une zone de chevauchement en appui sur la came amovible.

La came amovible constitue ainsi un élément extérieur qui procure l'appui interne pour le poinçon.

De façon avantageuse, dans l'étape b), la came amovible est introduite à travers une ouverture ménagée dans le collecteur. Il s'agit typiquement d'une ouverture servant au passage d'un tube du faisceau de l'échangeur de chaleur.

En ce cas, l'étape c) est suivie avantageusement d'une étape d) consistant à retirer la came amovible de la boîte collectrice après avoir terminé l'étape de poinçonnage c).

En variante, l'étape c) est suivie des étapes consistant à :
d1) retirer la came amovible de la position ayant servi à réaliser l'étape de poinçonnage c), tout en maintenant la came amovible à l'intérieur de la boîte collectrice ;
d2) basculer et/ou tourner la came amovible à l'intérieur de la boîte collectrice jusqu'à ce que la came amovible se trouve au niveau d'une autre zone de chevauchement ;
d3) appliquer la came amovible contre la face interne de l'assemblage au niveau de cette autre zone de chevauchement ; et
d4) réaliser à nouveau une étape de poinçonnage c) au niveau de cet autre zone de chevauchement.

Dans une autre forme de réalisation de l'invention, la boîte collectrice comporte une cloison intérieure longitudinale ayant une longueur supérieure à au moins 50 fois son épaisseur. En ce cas, dans l'étape b), on choisit comme appui interne une extrémité de la cloison longitudinale, tandis que, dans l'étape c), on pratique le poinçonnage dans une zone de chevauchement en appui sur cette extrémité de cloison.

Ainsi, la réaction à l'effort est assurée directement par la cloison longitudinale, sans nécessiter de prévoir un appui interne, tel qu'une came amovible, comme dans la forme de réalisation précédente.

Dans cette deuxième forme de réalisation, il est avantageux que, dans l'étape c), on pratique le poinçonnage dans une zone de la face externe située dans le prolongement de la cloison longitudinale. Cependant, il importe d'éviter la déformation par flambement de la cloison lorsque la longueur de celle-ci est supérieure à 50 fois son épaisseur.

En ce cas, il est avantageux que, dans l'étape c), on pratique plusieurs poinçonnages en même temps, en sorte que les positions respectives de ces poinçonnages soient réparties de façon symétrique par rapport au prolongement de la cloison longitudinale.

La distance entre chaque position de poinçonnage et le prolongement de la cloison longitudinale est avantageusement comprise entre 1 et 6 fois, de préférence entre 2 et 5 fois, l'épaisseur de la cloison longitudinale.

Il est donc avantageux de réaliser deux poinçonnages simultanés à l'aide de deux poinçons couplés.

Sous un autre aspect, l'invention concerne un assemblage d'une boîte collectrice sur un collecteur d'un échangeur de chaleur, pouvant être obtenu par la mise en oeuvre du procédé défini ci-dessus. Cet assemblage comprend au moins une empreinte par poinçonnage sur la face externe de l'assemblage au niveau de l'appui interne de façon à obtenir un léger sertissage entre les bords latéraux de la boîte collectrice et du collecteur.

Dans une première forme de réalisation de l'assemblage, la ou les empreintes sont réalisées sur un côté latéral de l'assemblage qui s'étend parallèlement à la cloison longitudinale.

Il est avantageux de prévoir plusieurs empreintes réparties sur la longueur de ce côté latéral.

Dans une deuxième forme de réalisation de l'invention, la ou les empreintes sont réalisées dans une zone de chevauchement dans une position située dans le prolongement direct de la cloison longitudinale intérieure.

En ce cas, les positions des empreintes sont de préférence réparties de façon symétrique par rapport au prolongement de la cloison longitudinale.

Dans la description qui suit, faite seulement à titre d'exemples, on se réfère aux dessins annexés, sur lesquels :
- la figure 1 est une vue de dessus avec arrachement d'un assemblage d'une boîte collectrice sur un collecteur d'un échangeur de chaleur, conformément à l'invention ;
- la figure 2 est une vue en coupe selon la ligne II-II de la figure 1 montrant une opération de poinçonnage effectuée sur un côté latéral parallèle à la cloison longitudinale ; et
- la figure 3 est un détail de la figure 1 montrant une opération de poinçonnage réalisée sur un côté latéral en appui sur une extrémité de la cloison longitudinale.

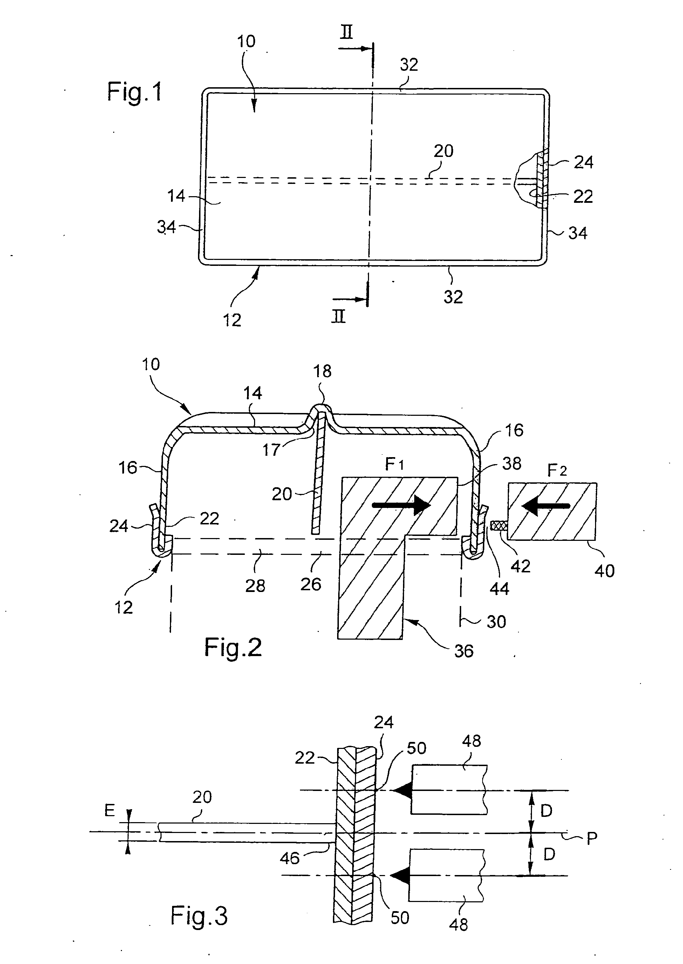

On se réfère tout d'abord à la figure 1 qui représente, en vue de dessus, une boîte collectrice 10 de forme générale rectangulaire assemblée sur un collecteur 12, également de forme générale rectangulaire. Comme on le voit sur la figure 2, la boîte collectrice 10 est réalisée par emboutissage d'une tôle métallique, avantageusement dans un alliage d'aluminium et elle comprend une paroi de fond 14 rattachée à des parois latérales 16 qui délimitent conjointement une face ouverte de forme générale rectangulaire. Dans la paroi de fond 14 est aménagée une rainure longitudinale 17 située du côté intérieur et délimitée extérieurement par une nervure longitudinale 18. Dans la rainure 17 est reçu un bord longitudinal d'une cloison longitudinale intérieure 20 de forme générale rectangulaire. La longueur de la cloison est grande en comparaison de son épaisseur, le rapport longueur/épaisseur étant typiquement d'au moins 50.

La boîte collectrice 10 présente à sa périphérie un bord latéral 22 de forme générale rectangulaire qui contribue à délimiter la face ouverte de la boîte collectrice. Ce bord latéral 22 est reçu dans un bord latéral 24 homologue, de forme relevée, que comporte le collecteur 12 à sa périphérie. Celui-ci comporte une âme centrale 26, généralement plane, qui est munie à sa périphérie du bord 24 précité. L'âme 26 est munie d'une série d'ouvertures transversales 28 destinées à accueillir chacune un tube 30 (représenté en trait interrompu) de l'échangeur de chaleur.

Les composants précités, à savoir la boîte collectrice 10 et sa cloison longitudinale 20, d'une part, ainsi que le collecteur 12, d'autre part, sont destinés à être assemblés par brasage, en même temps que l'ensemble de l'échangeur de chaleur, lors d'une opération de brasage conduite dans un four approprié. Pour cela, il est nécessaire que les différents composants de l'échangeur de chaleur soient maintenus correctement en place et ne puissent subir de mouvements intempestifs incontrôlés lors de cette opération de brasage.

Pour assurer un maintien provisoire du bord latéral 22 de la boîte collectrice 10 et du bord latéral 24 du collecteur 12, on prévoit, conformément à l'invention, de réaliser des empreintes par poinçonnage sur la face externe de l'assemblage.

Tout d'abord, le procédé comporte une étape préalable consistant à engager la boîte collectrice et le collecteur de sorte que leurs bords latéraux respectifs 22 et 24 se chevauchent au moins en partie, comme montré sur la figure 2. En d'autres termes, le bord latéral 22 de la boîte collectrice 10 est reçu complètement dans le rebord relevé 24 du collecteur 12.

Ensuite, on pratique des empreintes par poinçonnage sur la face externe de l'assemblage, à la fois sur les côtés longitudinaux 32 (parallèles à la cloison 20) et sur les côtés transversaux 34 qui sont perpendiculaires aux côtés longitudinaux 32.

Dans tous les cas, on prévoit un appui sur la face interne de l'assemblage au niveau du chevauchement pour assurer une réaction à l'effort du poinçon.

Dans le cas de la figure 2, on introduit une came amovible 36 à l'intérieur de la boîte collectrice 10 au travers d'une ouverture 28 ménagée dans le collecteur 12. La came 36 a ici une forme de L et elle comporte une extrémité 38 formant appui. Cette extrémité 38 est déplacée parallèlement à l'âme 26 du collecteur dans la direction de la flèche F1 jusqu'à ce qu'elle vienne en appui contre une paroi latérale 16 de la boîte collectrice. L'extrémité 38 forme ainsi un appui sur la face interne de l'assemblage ce qui permet de réaliser un poinçonnage à l'aide d'une pièce 40 portant un poinçon 42 et déplacée dans la direction de la flèche F2 (figure 2). La came amovible forme ainsi un appui interne qui permet de résister à l'effort du poinçon 42. L'action du poinçon créé un léger sertissage entre les bords latéraux de la boîte collectrice et du collecteur, ce sertissage se traduisant par une empreinte 44 montrée schématiquement sur la figure 2.

L'étape d'introduction de l'empreinte est suivie d'une étape consistant à retirer la came amovible de la boîte collectrice après avoir terminé l'étape de poinçonnage.

De préférence, l'étape de poinçonnage c) est suivie des étapes consistant à :
d1) retirer la came amovible 36 de la position ayant servi à l'étape de poinçonnage c) tout en maintenant la came amovible à l'intérieur de la boîte collectrice ;
d2) basculer et/ou tourner la came amovible 36 à l'intérieur de la boîte collectrice 10 jusqu'à ce que la came amovible se trouve au niveau d'une autre zone de chevauchement ;
d3) appliquer la came amovible contre la face interne de l'assemblage au niveau de cet autre zone de chevauchement ; et
d4) réaliser à nouveau une étape de poinçonnage c) au niveau de cette autre zone de chevauchement.

Une fois qu'un ou plusieurs poinçonnages ont été effectués, la came est retirée de la boîte collectrice, et peut être introduite par une autre ouverture dans la boîte collectrice pour permettre une autre opération de poinçonnage.

Cette opération de poinçonnage peut être effectuée en plusieurs endroits répartis judicieusement sur chacun des côtés longitudinaux 32 (grands côtés) de l'assemblage.

Pour réaliser le poinçonnage sur les côtés transversaux 34 (petits côtés), il n'est pas nécessaire de prévoir un appui interne par une came ou analogue.

En effet, l'invention tire parti de l'existence de la cloison longitudinale 20 pour se servir de cette cloison longitudinale comme appui interne.

Comme on le voit sur la figure 3, la cloison longitudinale 20 comporte une extrémité 46, réalisée sous la forme d'un bord formant appui contre une paroi 16 de la boîte collectrice, cette paroi 16 étant située ici sur un petit côté 34 de l'assemblage. On choisit cette extrémité 46 de la cloison longitudinale 20 pour former un appui interne. Ensuite, dans l'étape c) de poinçonnage, on pratique le poinçonnage dans une zone de chevauchement en appui sur cette extrémité de cloison.

Ce poinçonnage est plus particulièrement réalisé dans une zone de la face externe située dans le prolongement P (figure 3) de la cloison longitudinale. La longueur de la cloison longitudinale est grande devant son épaisseur. Il importe donc d'éviter tout flambement de cette cloison lors de l'opération d'assemblage.

Il est avantageux de réaliser simultanément plusieurs poinçonnages grâce à deux poinçons 48 dont les positions respectives sont symétriques par rapport au prolongement P de la cloison longitudinale. La distance D entre chaque position de poinçonnage et le prolongement P de la cloison est avantageusement comprise entre 1 et 6 fois, de préférence entre 2 et 5 fois l'épaisseur E de la cloison. On crée ainsi deux empreintes symétriques 50.

Ces deux poinçonnages sont réalisés avantageusement grâce à l'aide de deux poinçons couplés. Les poinçons 48 sont à cet effet portés par une pièce commune (non représentée).

On comprendra que, dans l'invention, on peut utiliser soit le procédé de poinçonnage de la figure 2, soit le procédé de poinçonnage de la figure 3, soit de préférence les deux à la fois.

Une fois la ou les opérations de poinçonnage effectuées, la boîte collectrice et le collecteur sont assemblés provisoirement par sertissage, garantissant un maintien mutuel de ces deux composants lors de l'opération ultérieure de brasage. Cette opération de brasage s'effectue avantageusement dans un four de brasage sur l'ensemble des composants de l'échangeur de chaleur préalablement assemblés.

L'invention trouve une application particulière aux échangeurs de chaleur de véhicules automobiles. Il peut s'agir en particulier d'un radiateur de refroidissement du moteur, d'un radiateur de chauffage de l'habitacle, d'un refroidisseur d'air de suralimentation du moteur, d'un condenseur ou d'un évaporateur de climatisation, etc.

## Revendications

1. Procédé d'assemblage d'une boîte collectrice (10) sur un collecteur (12) d'un échangeur de chaleur, la boîte collectrice (10) étant de forme générale rectangulaire, le procédé comportant une étape a) consistant à engager la boîte collectrice et le collecteur de sorte que leurs bords latéraux respectifs (22, 24) se chevauchent au moins en partie, afin d'assurer une fixation provisoire de la boîte collectrice et du collecteur avant brasage,
**caractérisé en ce que** l'étape a) est suivie des étapes consistant à :
b) prévoir un appui (36 ; 46) sur la face interne de l'assemblage au niveau du chevauchement ; et
c) pratiquer au moins une empreinte (44 ; 50) par poinçonnage sur la face externe de l'assemblage au niveau de l'appui interne de façon à obtenir un léger sertissage entre les bords latéraux (22 ; 24) de la boîte collectrice et du collecteur.

2. Procédé selon la revendication 1, **caractérisé en ce que** dans l'étape b) on introduit une came amovible (36) à l'intérieur de la boîte collectrice (10) et on applique la came amovible contre la face interne de l'assemblage pour former l'appui interne et que dans l'étape c) on pratique le poinçonnage dans une zone de chevauchement en appui sur la came amovible (36).

3. Procédé selon la revendication 2, **caractérisé en ce que** dans l'étape b) la came amovible (36) est introduite à travers une ouverture (18) ménagée dans le collecteur (12).

4. Procédé selon l'une des revendications 2 et 3,
**caractérisé en ce que** l'étape b) est suivie d'une étape d) consistant à retirer la came amovible (36) de la boîte collectrice (10) après avoir terminé l'étape de poinçonnage c).

5. Procédé selon l'une des revendications 2 à 3,
**caractérisé en ce que** l'étape de poinçonnage c) est suivie des étapes consistant à :
d1) retirer la came amovible (36) de la position ayant servi à réaliser l'étape c), tout en maintenant la came amovible à l'intérieur de la boîte collectrice ;
d2) basculer et/ou tourner la came amovible (36) à l'intérieur de la boîte collectrice (10) jusqu'à ce que la came amovible se trouve au niveau d'une autre zone de chevauchement ;
d3) appliquer la came amovible (36) contre la face interne de l'assemblage au niveau de cette autre zone de chevauchement ; et
d4) réaliser à nouveau une étape de poinçonnage c) au niveau de cette autre zone de chevauchement.

6. Procédé selon la revendication 1, **caractérisé en ce que** la boîte collectrice comporte une cloison intérieure longitudinale (20) ayant une longueur supérieure à au moins 50 fois son épaisseur, **en ce que** dans l'étape b) on choisit comme appui interne une extrémité (46) de la cloison longitudinale (20), et que dans l'étape c) on pratique le poinçonnage dans une zone de chevauchement en appui sur cette extrémité (46) de la cloison.

7. Procédé selon la revendication 6, **caractérisé en ce que** dans l'étape c) on pratique le poinçonnage dans une zone de la face externe située dans le prolongement de la cloison longitudinale (20).

8. Procédé selon la revendication 7, **caractérisé en ce que** dans l'étape c) on pratique plusieurs poinçonnages en même temps en sorte que les positions respectives de ces poinçonnages soient réparties de façon symétrique par rapport au prolongement (P) de la cloison longitudinale (20) .

9. Procédé selon la revendication 8, **caractérisé en ce que** la distance (D) entre chaque position de poinçonnage et le prolongement (P) de la cloison est comprise entre 1 et 6 fois, de préférence entre 2 et 5 fois, l'épaisseur (E) de la cloison longitudinale (20).

10. Procédé selon l'une des revendications 8 et 9,
**caractérisé en ce que** l'on réalise deux poinçonnages simultanés à l'aide de deux poinçons couplés (48).

11. Assemblage d'une boîte collectrice (10) sur un collecteur (12) d'un échangeur de chaleur, pouvant être obtenu par la mise en oeuvre du procédé selon l'une des revendications 1 à 10, **caractérisé en ce qu'**il comprend au moins une empreinte (44 ; 50) réalisée par poinçonnage sur la face externe de l'assemblage au niveau de l'appui interne de façon à obtenir un léger sertissage entre les bords latéraux respectifs (22 ; 24) de la boîte collectrice (10) et du collecteur (12).

12. Assemblage selon la revendication 11, **caractérisé en ce que** la ou les empreintes (44) sont réalisées sur un côté latéral (32) de l'assemblage qui s'étend parallèlement à la cloison longitudinale (20).

13. Assemblage selon la revendication 12, **caractérisé en ce qu'**il comprend plusieurs empreintes (44) réparties sur la longueur de ce côté latéral (32).

14. Assemblage selon la revendication 11, **caractérisé en ce que** les empreintes (50) sont réalisées dans la zone de chevauchement en une position située dans le prolongement (P) de la cloison intérieure longitudinale (20).

15. Assemblage selon la revendication 14, **caractérisé en ce que** les positions des empreintes (50) sont réparties de façon symétrique par rapport au prolongement (P) de la cloison intérieure longitudinale (20).
